# EUROPEAN PATENT SPECIFICATION

(11) **EP 2 323 942 B1**
(45) Date of publication and mention of the grant of the patent: **04.10.2017**
(21) Application number: 09806487.6
(22) Date of filing: 11.08.2009
(51) Int. Cl.: B66B 7/08, F16G 11/04

(54) **METHOD AND ARRANGEMENT FOR FIXING THE COMPENSATING ROPES OF AN ELEVATOR**
VERFAHREN UND ANORDNUNG ZUR BEFESTIGUNG DER AUSGLEICHSSEILE EINES AUFZUGS
PROCÉDÉ ET AMÉNAGEMENT DE FIXATION DES CORDES DE COMPENSATION D'UN ASCENSEUR

(30) Priority: 13.08.2008 FI 20080464
(43) Date of publication of application: 25.05.2011
(73) Proprietor: Kone Corporation, 00330 Helsinki (FI)
(72) Inventor: HÄGG, Jori, FIN-11910 Riihimäki (FI); ALBU, Razvan, FIN-05860 Hyvinkää (FI); LUOMA, Jani, FI-01730 Vantaa (FI)
(74) Representative: K & H Bonapat Patentanwälte Koch · von Behren & Partner mbB
(86) International application number: PCT/FI2009/000075
(87) International publication number: WO 2010/018299

(56) References cited:
- JP-A- 7 228 448
- JP-A- 55 166 552
- JP-A- H06 255 945
- US-A- 5 353 893
- US-A- 5 353 893

## Description

The present invention relates to a method as defined in the preamble of claim 1 and an arrangement as defined in the preamble of claim 5 for fixing the compensating ropes of an elevator.

In traction sheave elevators with counterweight the weight of the hoisting roping produces an imbalance between the elevator car and the counterweight when the height difference between the elevator car and the counterweight is great. The imbalance is at its greatest when the elevator car is in the top part of the elevator hoistway and the counterweight is in the bottom part of the hoistway, or *vice versa.* This is a problem in elevators of large travel heights because these elevators comprise long and heavy hoisting ropes. Owing to the great height difference between the elevator car and the counterweight as well as to the heavy hoisting ropes, the imbalance can increase to be so large that the friction between the hoisting ropes and the rope grooves of the traction sheave is not sufficient, in which case the hoisting roping starts to slip on the traction sheave. In elevators of smaller travel heights the imbalance caused by the hoisting roping is not of substantial importance because it is relatively small, so that it can be ignored, but the large imbalance produced with larger travel heights must be compensated in some way. The aforementioned imbalance must generally be compensated in elevators in which the travel height is greater than a certain height. In some elevator solutions a travel height of just 30 - 40 meters necessitates compensation of the imbalance.

In prior art the imbalance between the elevator car and the counterweight is compensated with so-called compensating ropes, which are fixed at their first ends to the bottom part of the elevator car and at their second ends to the bottom part of the counterweight. When the elevator car is in the bottom part of the elevator hoistway, the counterweight is in the top part of the hoistway, and the part of the hoisting rope on the elevator car side of the traction sheave in the top part of the hoistway is long and heavy. In this case, however, the compensating ropes hanging from the bottom part of the counterweight are also long and heavy, in which case they compensate the imbalance produced by the hoisting roping in the rope forces on the traction sheave. The compensating ropes do not necessarily hang freely in the hoistway. In fast and high-rise elevators, the bottom part of the elevator hoistway comprises a compensating pulley fitted to move in the vertical direction guided by the guide rails, under which compensating pulley the compensating ropes are fitted to pass. A tensioning weight, which is arranged to keep the compensating ropes at the desired tension, is also normally fitted in connection with the compensating pulley.

A problem in these solutions is that the fixing location of the compensating ropes below the elevator car is generally very cramped, in which case the fixing of the ends of the compensating ropes is difficult. Another problem is that a sufficiently large vertical space must be left below the elevator car for fixing the ends of the compensating ropes. This type of hoistway space that must be constructed purely for the fixing of the compensating rope is unnecessarily expensive. When striving for bottom clearances of the elevator hoistway, i.e. spaces which remain below the elevator car when the elevator car is in its bottom position, that are as shallow as possible the vertical space required by the fixing of the ends of the compensating ropes hampers achievement of the optimal depth of the bottom clearance in relation to other criteria. A further problem is that the prior-art fixings of the ends of the compensating ropes are not adjustable in the horizontal direction. In this case problems may arise in balancing the elevator car, in which case the balancing must be performed by means of additional weights or with other solutions that raise costs.

US 5 353 893 A discloses a method according to the preamble of independent claim 1 and an arrangement according to the preamble of independent claim 5.

The object of this invention is to eliminate the aforementioned drawbacks and to achieve a simple and inexpensive method and arrangement for fixing the compensating ropes of an elevator, in which arrangement the fixing solution does not take much space in the height direction of the elevator hoistway and enables easy fixing into position of the compensating ropes as well as at the same time easy horizontal adjustment of the fixing points of the ends of the compensating ropes in both the depth direction and the transverse direction of the elevator car. The method according to the invention is characterized by what is disclosed in the characterization part of claim 1. Correspondingly, the arrangement of the invention is characterized by what is disclosed in the characterization part of claim 5. Other embodiments of the invention are characterized by what is disclosed in the other claims.

In the following the method and the arrangement according to the invention are referred to jointly as the solution according to the invention. One advantage of the solution according to the invention is that a lot of valuable space is saved in the bottom part of the elevator hoistway, because the solution for fixing the ends of the compensating ropes is shallower than prior-art solutions. Another advantage is that the compensating ropes can be fixed into position in connection with the elevator car when the fixing base of the ropes is on the elevator car or fixed in connection with it. In this case the dimensioning of the compensating ropes is considerably easier and faster than in prior-art solutions. When the wedge housings of the compensating ropes are inclined away from the actual operating attitude, one advantage is also the easy fixing of the ends of the compensating ropes, which can be performed from the side or obliquely from the side, in which case the end of the ropes can be placed into the wedge housing as a large loop and using relatively little force. Yet another advantage is that an optimal fixing point for the compensating ropes, in both the depth direction and in the transverse direction of the elevator car, is easily found with the solution according to the invention, because these horizontal adjustments are easy to perform in connection with the fixing of the ends of the ropes. The solution according to the invention is thus applicable also in fixing the compensating ropes to the counterweight, in which case in the invention the compensating ropes are fixed to the frame of the counterweight or to another structure in the same way as is now presented for fixing them to the structure of the elevator car.

In the following, the invention will be described in detail by the aid of one example of its embodiment with reference to the attached drawings, wherein
- Fig. 1: presents a simplified side view of one elevator provided with compensating ropes,
- Fig. 2: presents a simplified side view of a fixing solution of the ends of the compensating ropes according to the invention on the elevator car side in the fixing phase of the compensating ropes,
- Fig. 3: presents a simplified side view of a fixing solution of the ends of the compensating ropes according to the invention on the elevator car side after the fixing of the compensating ropes,
- Fig. 4: presents a simplified front view of a fixing solution of the ends of the compensating ropes according to the invention on the elevator car side in the fixing phase of the compensating ropes, and
- Fig. 5: presents a simplified front view of a fixing solution of the ends of the compensating ropes according to the invention on the elevator car side after the fixing of the compensating ropes.

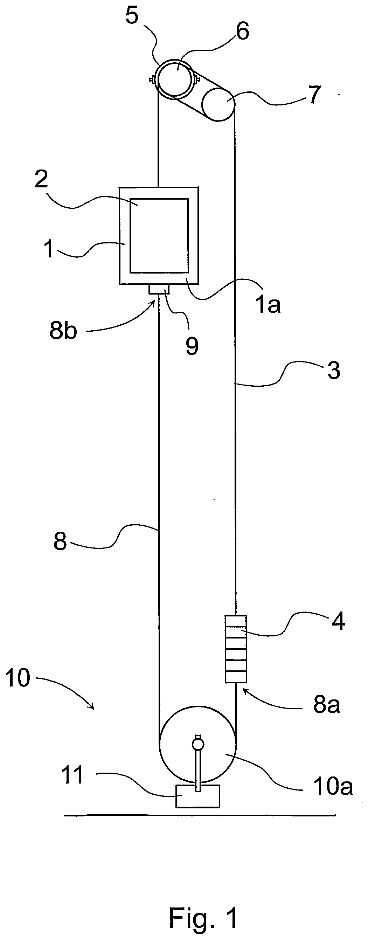

Fig. 1 presents a simplified side view of one elevator solution in which compensating ropes are used. The elevator is a normal traction sheave elevator with counterweight, in which the elevator car 2 as well as the counterweight 4 are suspended on hoisting roping 3. The elevator receives its lifting force from the hoisting machine 6 as a result of the friction between the traction sheave 5 and the hoisting roping 3. The hoisting roping 3 is fixed at its first end to the top part of the elevator car 2 provided with a car sling 1, from where is led to pass around the top of the traction sheave 5, after which around the diverting pulley 7 disposed in connection with the hoisting machine 6 of the elevator, and from there again around the top of the traction sheave 5. After this the hoisting roping 3 is led over the diverting pulley 7 down towards the counterweight 4, to the top part of which the second end of the hoisting roping 3 is fixed.

The compensating ropes 8 are fixed at the first ends 8a to the bottom part of the counterweight 4, from where they are led below the compensating pulley 10a incorporated in the compensation apparatus 10, after which upwards to the elevator car 2, and the compensating ropes 8 are fixed at their second ends 8b to the bottom beam 1a of the car sling 1 on the bottom part of which elevator car by means of a fixing base 9. A tensioning weight 11 or corresponding tensioning apparatus incorporated in the compensation apparatus 10 is also fixed in connection with the compensating pulley 10a, which tensioning weight is arranged to keep the compensating ropes 8 at the desired tension. The compensating pulley 10a is disposed e.g. inside a frame fixed to the bottom of the hoistway, which frame comprises guides, guided by which the compensating pulley 10a is fitted to move in the vertical direction. This frame, however, is omitted from Fig. 1 for the sake of clarity.

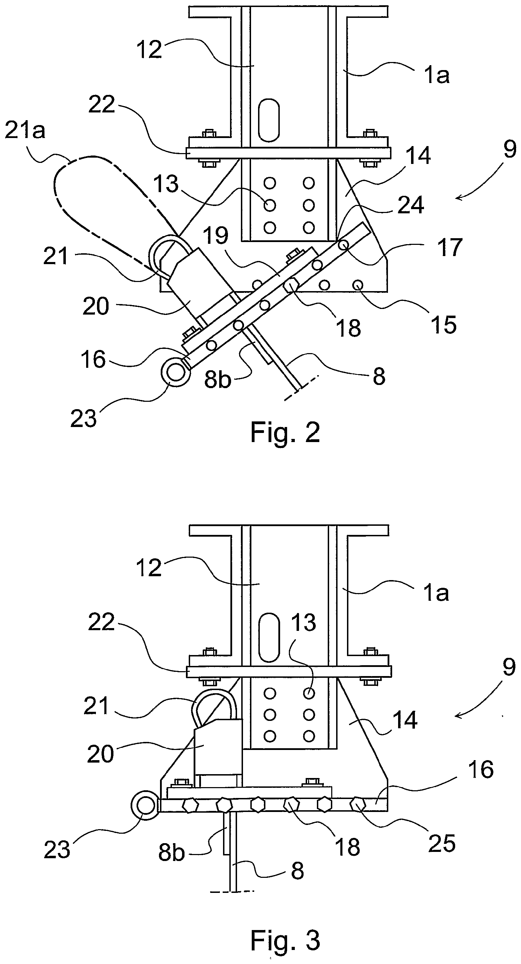

Figs. 2-5 present simplified, partly sectioned side and front views of a fixing solution of the second ends 8b of the compensating ropes 8 according to the invention on the elevator car 2 side in the fixing phase of the ends of the compensating ropes 8 on the elevator car side and after the fixing. For the sake of clarity, the second suspension means 14 that is closer to the viewer is cut completely away so that the parts between the suspension means can be seen clearly enough.

For the purpose of fixing the second ends 8b of the compensating ropes 8, a fixing base 9 is fixed to the bottom beam 1a of the car sling 1 of the elevator, in as optimal a location as possible in relation to the balance of the elevator car 2 in the longitudinal direction of the bottom beam 1a, by means of bracket elements 12. The bracket elements 12 are e.g. beams of a U-profile, which are fixed at their top part to the bottom beam 1a in a vertical position - when being seen fixed together - and into the fixing holes 13 in the bottom part of which bracket elements 12 the fixing base 9 of the second ends 8b of the compensating ropes 8 is fixed e.g. with a bolt-nut fixing.

The fixing base 9 comprises e.g. two plate-like suspension means 14 that are at a distance from each other and which are fixed at their top ends to the fixing holes 13 of the bracket elements 12, and the bottom edge of which suspension means comprises a plurality of fixing holes 15 at set intervals in row shape. As viewed from the side, i.e. in the longitudinal direction of the bottom beam 1a, the suspension means 14 are asymmetrical in relation to the vertical line of the car sling 1, which asymmetry enables easy adjustment of the second ends of the compensating rope 8 in the depth direction of the elevator car 2 simply by turning the suspension means 14 around 180 degrees in the vertical plane.

A, for example, plate-like bracket 16 of the wedge housings 20 of the compensating ropes 8, that is bent downwards at its edges is fixed to the holes 15 of the suspension means 14. The bracket 16 comprises a plurality of fixing holes 17 disposed at set intervals from each other, the size of which and the distance from each other of which are essentially the same as the size of and the distance from each other of the fixing holes 15 of the suspension means 14. In this way the bracket 16 is arranged to be fixed to the holes 15 of the suspension means 14 by its fixing holes 17 e.g. with a bolt-nut fixing 24.

The top surface of the bracket 16 comprises a support plate 19, onto the top of which support plate the wedge housings 20 that are used for fixing the second ends 8b of the compensating ropes 8 are fixed in one or more rows side by side. In addition, the front edge of the bracket 16 comprises a loop 23, by means of which the bracket 16 can be turned around its hinge 18. There can also be support plates 22 as an additional reinforcement in the structure, which support plates are fixed e.g. with a screw fixing to the bottom surface of the bottom beam 1a in connection with the bracket elements 12.

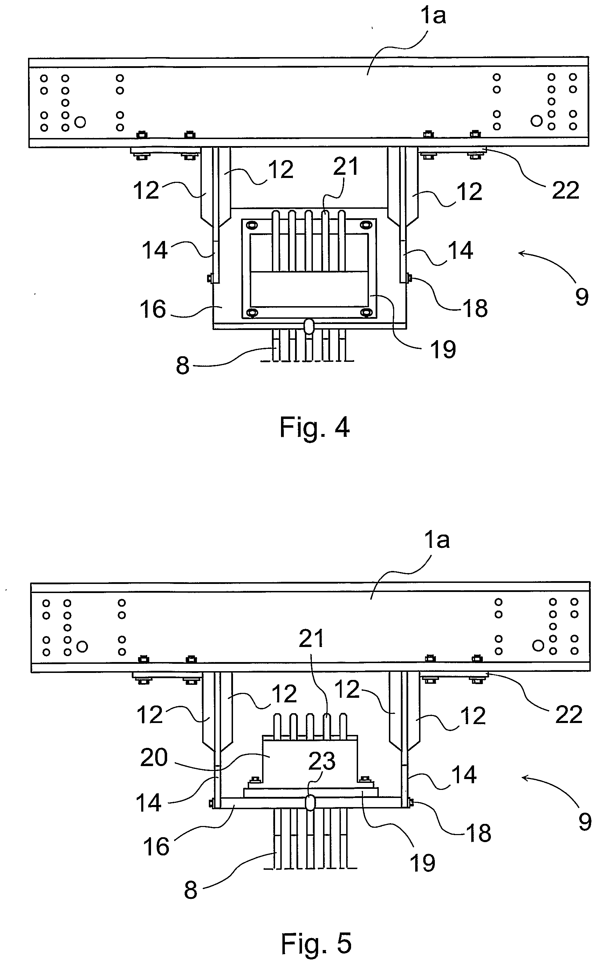

Figs. 2 and 4 present a situation in which the second ends 8b of the compensating ropes 8 are just being fixed to the wedge housings 20. For the purposes of fixing, the bracket 16 is hinged to the fixing holes 15 of the suspension means with one bolt 18, which is disposed in some inner fixing hole 17 of the bracket 16, e.g. in the third fixing hole 17 counting from the second end such that the bolt 18 forms a pivot-type essentially horizontal hinge, around which the bracket 16 can be turned in the vertical plane. The bracket 16 and the support plate 19 comprise suitable holes for passing through the second ends 8b of the compensating ropes 8, first in the second direction and then back, which holes are in essentially the same location to each other.

When fixing the ends of the compensating ropes 8, the bracket 16 is turned around the hinge formed by the bolt 18 into an inclined attitude to the side of the bottom beam 1a such that the wedge housings 20 point at an angle upwards and away from the bottom beam 1a. The bottom corners of the bracket elements 12 are arranged to function as a stop 24 for preventing too much turning of the bracket 16. In this case the stop 24 functions as a safety device, so that the weight of the compensating ropes 8 does not manage to pull the bracket 16 in an uncontrolled manner into an angle that is too inclined.

After this it is easy to bend the end 8b of the compensating rope 8 first into a larger loop 21a and then to press its free end into the wedge housing 20 together with the wedge in an inclined attitude with respect to the vertical direction, in which case a small loop 21 remains above the wedge housing 20. The free end 8b threaded through the wedge housing 20 is fixed to the corresponding compensating rope 8 below the wedge housing 20 and the bracket 16. When all the ends 8b of the compensating ropes 8 are fixed in this way, the bracket 16 is turned around the hinge formed by the bolt 18 into its essentially horizontal normal position and is fixed into position suspended on the suspension means 14 by the aid of the bolts and fixing nuts 24 disposed in the holes 15 and 17.

It can be generalized from the above that in the method according to the invention when fixing the ends 8b of the compensating ropes 8 in connection with the elevator car 2, the wedge housings 20 are turned into an inclined attitude before disposing the ends 8b of the compensating ropes 8 in the wedge housings 20.

If the compensating ropes must be replaced, the bolts other than the bolt 18 that functions as a hinge are detached and the bracket 16 is turned around the hinge formed by the bolt 18 into an inclined position, and also the rope to be replaced is detached and a new rope or new ropes is put in its place, after which the bracket 16 is again turned into its normal position and is locked in position by means of the bolts and fixing nuts 24 disposed in the holes 15 and 17.

Horizontal adjustment of the fixing of the second ends 8b of the compensating ropes 8 is performed in the depth direction of the elevator car 2, i.e. transversely with respect to the longitudinal direction of the bottom beam 1a, in two different ways. Either with the aforementioned method by turning the suspension means 14 around 180 degrees in the vertical plane before fixing the bracket 16 to the suspension means 14, or by moving the bracket 16 in relation to the fixing holes 15 in the depth direction of the elevator car 2. Thus the adjustment is very versatile. Correspondingly, horizontal adjustment of the fixing of the second ends 8b of the compensating ropes 8 in the longitudinal direction of the bottom beam 1a is performed by disposing the bracket elements 12 in a suitable location with regard to horizontal adjustment in the longitudinal direction of the bottom beam 1a.

It is obvious to the person skilled in the art that different embodiments of the invention are not limited to the example described above, but that they may be varied within the scope of the claims presented below. Thus, for example, the bracket of the wedge housings can be different to what is presented above. Instead of being a plate structure bent at its ends, it can be one thick plate or e.g. a plate on the bottom surface of which is a plurality of pipes that correspond to the holes in the edges of the plate or that go through the plate.

It is further obvious to the person skilled in the art that the wedge housings can be in more than one row, e.g. in two rows side by side.

It is also obvious to the person skilled in the art that the fixing base can be structurally and functionally different to what is described above.

## Claims

1. Method for fixing the compensating ropes (8) of an elevator to an elevator car (2) and/or to a counterweight (4), which elevator comprises at least a hoisting machine (6) and hoisting roping (3), on which the elevator car (2) arranged to travel essentially in the vertical direction as well as the counterweight (4) are suspended, and between which elevator car (2) and counterweight (4) said compensating ropes (8) are fixed such that the first ends (8a) of the compensating ropes (8) are fixed to the counterweight (4), from where the compensating ropes (8) are led downwards, if necessary to pass below a compensating pulley (10a), after which upwards again to the elevator car (2), where the second ends (8b) of the compensating ropes (8) are fixed in connection with the elevator car (2) by means of wedge housings (20), **characterized in that** when fixing the ends (8a, 8b) of the compensating ropes (8) in connection with the elevator car (2) and/or with the counterweight (4), the wedge housings (20) are turned into an inclined attitude, before disposing the ends (8a, 8b) of the compensating ropes (8) in the wedge housings (20).

2. Method according to claim 1, **characterized in that** when fixing the ends (8b) of the compensating ropes (8) in connection with the elevator car (2) the wedge housings (20) are turned around a hinge (18) into an inclined attitude, such that the wedge housings (20) point upwards at an angle, after which the ends (8b) of the compensating ropes (8) are bent and pushed into the wedge housings (20) together with the wedges in an essentially inclined attitude with respect to the vertical direction.

3. Method according to claim 1 or 2, **characterized in that** when fixing the ends (8b) of the compensating ropes (8) in connection with the elevator car (2) the wedge housings (20) are turned by means of a bracket (16) suspended on the bottom beam (1a) of the elevator car (2) around a hinge (18) into an inclined attitude, the ends (8b) of the compensating ropes (8) are fixed in the wedge housings (20) and when all the ends (8b) of the compensating ropes (8) are fixed in this way, the bracket (16) is turned around the hinge (18) into its essentially horizontal normal position and is also fixed into position on the suspension means (14) fixed to the bottom beam (1a) of the elevator car (2) by the aid of fixing means (24).

4. Method according to claim 1, 2 or 3, **characterized in that** the fixing location of the ends (8b) of the compensating ropes (8) is adjusted in the horizontal direction in the depth direction of the elevator car (2) by moving the bracket (16) of the wedge housings (20) in the depth direction of the elevator car (2) and/or by turning the suspension means (14) around 180 degrees in the vertical plane before fixing the bracket (16) to the suspension means (14).

5. Arrangement for fixing compensating ropes (8) of an elevator to an elevator car (2) and/or to a counterweight (4), which elevator comprises at least a hoisting machine (6) and hoisting roping (3), on which the elevator car (2) arranged to travel essentially in the vertical direction as well as the counterweight (4) are suspended, and between which elevator car (2) and counterweight (4) said compensating ropes (8) are fixed such that the first ends (8a) of the compensating ropes (8) are fixed to the counterweight (4), from where the compensating ropes (8) are led downwards, if necessary to pass below a compensating pulley (10a), after which upwards again to the elevator car (2), where the second ends (8b) of the compensating ropes (8) are fixed by means of wedge housings (20) in connection with the elevator car (2), **characterized in that** the wedge housings (20) are arranged to be turned into an inclined attitude, for fixing the ends (8a, 8b) of the compensating ropes (8) in connection with the elevator car (2) and/or the counterweight (4).

6. Arrangement according to claim 5, **characterized in that** the wedge housings (20) are fixed to a fixing base (9), which is provided with a hinge (18) or corresponding pivot-type structure, for turning the fixing base (9) into a favorable attitude for the purpose of fixing the second ends (8a) of the compensating ropes (8).

7. Arrangement according to claim 6, **characterized in that** the fixing base (9) comprises a bracket (16) of the wedge housings (20), which bracket is suspended from the bottom beam (1a) of the car sling (1) of the elevator car (2) at least via a plurality of suspension means (14) provided with fixing holes (15).

8. Arrangement according to claim 7, **characterized in that** the bracket (16) of the wedge housings (20) comprises a plurality of fixing holes (17) disposed at set intervals from each other, the size of which and the distance from each other of which are essentially the same as the size of and the distance from each other of the fixing holes (15) of the suspension means (14).

9. Arrangement according to claim 7 or 8, **characterized in that** the bracket (16) is arranged to be fixed to the suspension means (14) at stepped intervals, which intervals correspond to the distance between the fixing holes (15 and 17).

10. Arrangement according to any one of claims 7-9 above, **characterized in that** bracket elements (12) that can be adjusted in their position in the longitudinal direction of the bottom beam (1a) are fixed to the bottom beam (1a) of the elevator car (2), to which bracket elements the suspension means (14) are fixed at their top ends.

11. Arrangement according to claim 10, **characterized in that** the bottom corner of the bracket elements (12) is arranged to function as a stop (24) for preventing too much turning of the bracket (16).

## Patentansprüche

1. Verfahren zum Fixieren der Kompensationsseile (8) eines Aufzuges an eine Aufzugskabine (2) und/oder an ein Gegengewicht (4), welcher Aufzug mindestens eine Hebemaschine (6) und eine Hebeseilung (3) aufweist, an der die für einen im Wesentlichen in der Vertikalrichtung verfahrbare Aufzugskabine (2) wie auch das Gegengewicht (4) aufgehängt sind, wobei zwischen der Aufzugskabine (2) und dem Gegengewicht (4) besagte Kompensationsseile (8) derart fixiert sind, dass die ersten Enden (8a) der Kompensationsseile (8) an dem Gegengewicht (4) fixiert sind, von wo die Kompensationsseile (8) nach unten gelassen werden, falls erforderlich, um unter eine Kompensations-Seilscheibe (10a) geführt zu werden, wonach sie wieder nach oben an die Aufzugskabine (2) geführt werden, wo die zweiten Enden (8b) der Kompensationsseile (8) in Verbindung mit der Aufzugskabine (2) mit Hilfe von Keil-Gehäusen (20) fixiert werden, **dadurch gekennzeichnet, dass** beim Fixieren der Enden (8a, 8b) der Kompensationsseile (8) in Verbindung mit der Aufzugskabine (2) und/oder mit dem Gegengewicht (4) die Keil-Gehäuse (20) in eine geneigte Stellung gedreht werden, bevor die Enden (8a, 8b) der Kompensationsseile (8) in den Keil-Gehäusen (20) angeordnet werden.

2. Verfahren gemäß Anspruch 1, **dadurch gekennzeichnet, dass** beim Fixieren der Enden (8b) der Kompensationsseile (8) in Verbindung mit der Aufzugskabine (2) die Keil-Gehäuse (20) um ein Gelenk (18) in eine geneigte Stellung gedreht werden, derart, dass die Keil-Gehäuse (20) in einem Winkel nach oben zeigen, wonach die Enden (8b) der Kompensationsseile (8) gebogen und in die Keil-Gehäuse (20) zusammen mit den Keilen in einer im Wesentlichen geneigten Stellung bezüglich der Vertikalrichtung geschoben werden.

3. Verfahren gemäß Anspruch 1 oder 2, **dadurch gekennzeichnet, dass** beim Fixieren der Enden (8b) der Kompensationsseile (8) in Verbindung mit der Aufzugskabine (2) die Keil-Gehäuse (20) mit einem Ausleger (16) gedreht werden, der auf dem Sohlenträger (1a) der Aufzugskabine (2) angelenkt ist, und zwar um ein Gelenk (18) in eine geneigte Stellung, wobei die Enden (8b) der Kompensationsseile (8) in den Keil-Gehäusen (20) fixiert werden, und wenn alle Enden (8b) der Kompensationsseile (8) auf diese Weise fixiert sind, der Ausleger (16) um das Gelenk (18) in seine im Wesentlichen horizontale Normalstellung gedreht wird und ebenso in eine Position auf den Haltemitteln (14) fixiert wird, die an dem Sohlenträger (1a) der Aufzugskabine (2) mit Hilfe von Fixierungsmitteln (24) fixiert sind.

4. Verfahren gemäß Anspruch 1, 2 oder 3, **dadurch gekennzeichnet, dass** die Fixier-Lokation der Enden (8b) der Kompensationsseile (8) in der Horizontalrichtung in der Tiefenrichtung der Aufzugskabine (2) durch Bewegen des Auslegers (16) der Keil-Gehäuse (20) in der Tiefenrichtung der Aufzugskabine (2) justiert wird, und/oder durch Drehen der Aufhängemittel (14) um 180 Grad in der Vertikalebene, bevor der Ausleger (16) an den Haltemitteln (14) fixiert wird.

5. Einrichtung zum Fixieren von Kompensationsseilen (8) eines Aufzuges an einer Aufzugskabine (2) und/oder an ein Gegengewicht (4), welcher Aufzug mindestens eine Hebemaschine (6) und eine Hebeseilung (3) aufweist, an der die zum Verfahren von im Wesentlichen in der Vertikalrichtung angeordnete Aufzugskabine (2) wie auch das Gegengewicht (4) aufgehängt sind, und wobei zwischen der Aufzugskabine (2) und dem Gegengewicht (4) besagte Kompensationsseile (8) derart fixiert sind, dass die ersten Enden (8a) der Kompensationsseile (8) an dem Gegengewicht (4) fixiert sind, von wo die Kompensationsseile (8) nach unten gelassen sind, um bei Bedarf unter eine Kompensations-Seilscheibe (10a) geführt zu werden, wonach sie wieder nach oben an die Aufzugskabine (2) geführt sind, wo die zweiten Enden (8b) der Kompensationsseile (8) mit Hilfe von Keil-Gehäusen (20) in Verbindung mit der Aufzugskabine (2) fixiert sind, **dadurch gekennzeichnet, dass** die Keil-Gehäuse (20) dazu angeordnet sind, in eine geneigte Stellung gedreht zu werden, um die Enden (8a, 8b) der Kompensationsseile in Verbindung mit der Aufzugskabine (2) und/oder dem Gegengewicht (4) zu fixieren.

6. Einrichtung gemäß Anspruch 5, **dadurch gekennzeichnet, dass** die Keil-Gehäuse (20) an einer Fixierbasis (9) fixiert sind, die mit einem Gelenk (18) oder entsprechender Drehstruktur versehen ist, um die Fixierbasis (9) in eine bevorzugte Stellung zum Zwecke der Fixierung der zweiten Enden (8a) der Kompensationsseile (8) zu drehen.

7. Einrichtung gemäß Anspruch 6, **dadurch gekennzeichnet, dass** die Fixierbasis (9) einen Ausleger (16) der Keil-Gehäuse (20) aufweist, welcher Ausleger von dem Sohlenträger (1a) des Kabinenrahmens (1) der Aufzugskabine (2) gehalten wird, zumindest über eine Mehrzahl von Haltemitteln (14), die mit Fixierlöchern (15) versehen sind.

8. Einrichtung gemäß Anspruch 7, **dadurch gekennzeichnet, dass** der Ausleger (16) der Keil-Gehäuse (20) eine Mehrzahl an Fixierlöchern (17) aufweist, die zu gesetzten Intervallen zueinander angeordnet sind, wobei deren Größe und der Abstand zueinander im Wesentlichen gleichgroß ist zur Größe und zu dem gegenseitigen Abstand der Fixierlöcher (15) der Haltemittel (14).

9. Einrichtung gemäß Anspruch 7 oder 8, **dadurch gekennzeichnet, dass** der Ausleger (16) angeordnet ist, um an den Haltemitteln (14) zu Stufen-Intervallen fixiert zu werden, welche Intervalle dem Abstand zwischen den Fixierlöchern (15 und 1 7) entsprechen.

10. Einrichtung gemäß einem der vorangehenden Ansprüche 7 - 9, **dadurch gekennzeichnet, dass** Auslegerelemente (12), die in ihrer Position in der Längsrichtung des Sohlenträgers (1a) einjustiert werden können, an dem Sohlenträger (1a) der Aufzugskabine (2) fixiert sind, an welche Auslegerelemente die Haltemittel (14) an deren oberen Enden fixiert sind.

11. Einrichtung gemäß Anspruch 10, **dadurch gekennzeichnet, dass** die Sohlenecke der Auslegerelemente (12) angeordnet ist, um als ein Anschlag (24) zu funktionieren, um ein zu weites Drehen des Auslegers (16) zu verhindern.

## Revendications

1. Procédé pour fixer les câbles de compensation (8) d'un ascenseur à une cabine d'ascenseur (2) et/ou à un contrepoids (4), ledit ascenseur comprenant au moins une machine de levage (6) et un câblage de levage (3), sur lequel la cabine d'ascenseur (2) agencée pour se déplacer sensiblement dans la direction verticale ainsi que le contrepoids (4) sont suspendus, et entre ladite cabine d'ascenseur (2) et ledit contrepoids (4) lesdits câbles de compensation (8) sont fiixés de telle sorte que les premières extrémités (8a) des câbles de compensation (8) sont fixées au contrepoids (4), d'où les câbles de compensation (8) sont dirigés vers le bas, si nécessaire pour passer en dessous d'une poulie de compensation (10a), après quoi à nouveau vers le haut jusqu'à la cabine d'ascenseur (2) où les secondes extrémités (8b) des câbles de compensation (8) sont fixées en liaison avec la cabine d'ascenseur (2) au moyen de logements de cales (20), **caractérisé en ce que**, lors de la fixation des extrémités (8a, 8b) des câbles de compensation (8) en liaison avec la cabine d'ascenseur (2) et/ou avec le contrepoids (4), les logements de cales (20) sont tournés jusqu'à atteindre une attitude inclinée, avant de disposer les extrémités (8a, 8b) des câbles de compensation (8) dans les logements de cales (20).

2. Procédé selon la revendication 1, **caractérisé en ce que**, lors de la fixation des extrémités (8b) des câbles de compensation (8) en liaison avec la cabine d'ascenseur (2), les logements de cales (20) sont tournés autour d'une charnière (18) jusqu'à atteindre une attitude inclinée, de telle sorte que les logements de cales (20) pointent vers le haut selon un certain angle, après quoi les extrémités (8b) des câbles de compensation (8) sont courbées et poussées dans les logements de cales (20) conjointement avec les cales dans une attitude sensiblement inclinée par rapport à la direction verticale.

3. Procédé selon la revendication 1 ou 2, **caractérisé en ce que**, lors de la fiixation des extrémités (8b) des câbles de compensation (8) en liaison avec la cabine d'ascenseur (2), les logements de cales (20) sont tournés au moyen d'un support (16) suspendu sur la poutre inférieure (1a) de la cabine d'ascenseur (2) autour d'une charnière (18) jusqu'à atteindre une attitude inclinée, les extrémités (8b) des câbles de compensation (8) sont fixées dans les logements de cales (20) et lorsque toutes les extrémités (8b) des câbles de compensation (8) sont fixées de cette manière, le support (16) est tourné autour de la charnière (18) jusque dans sa position normale sensiblement horizontale et est également fixé en position sur les moyens de suspension (14) fixés à la poutre infiérieure (1a) de la cabine d'ascenseur (2) à l'aide des moyens de fixation (24).

4. Procédé selon la revendication 1, 2 ou 3, **caractérisé en ce que** l'emplacement de fixation des extrémités (8b) des câbles de compensation (8) est ajusté dans la direction horizontale dans la direction de la profondeur de la cabine d'ascenseur (2) en déplaçant le support (16) des logements de cales (20) dans la direction de la profondeur de la cabine d'ascenseur (2) et/ou en tournant les moyens de suspension (14) de 180 degrés dans le plan vertical avant de fixer le support (16) aux moyens de suspension (14).

5. Agencement pour fixer les câbles de compensation (8) d'un ascenseur à une cabine d'ascenseur (2) et/ou à un contrepoids (4), ledit ascenseur comprenant au moins une machine de levage (6) et un câblage de levage (3), sur lequel la cabine d'ascenseur (2) agencée pour se déplacer sensiblement dans la direction verticale ainsi que le contrepoids (4) sont suspendus, et entre ladite cabine d'ascenseur (2) et ledit contrepoids (4), lesdits câbles de compensation (8) sont fixés de telle sorte que les premières extrémités (8a) des câbles de compensation (8) sont fixées au contrepoids (4), d'où les câbles de compensation (8) sont dirigés vers le bas, si nécessaire pour passer en dessous d'une poulie de compensation (10a), après quoi à nouveau vers le haut jusqu'à la cabine d'ascenseur (2), où les secondes extrémités (8b) des câbles de compensation (8) sont fixées au moyen de logements de cales (20) en liaison avec la cabine d'ascenseur (2), **caractérisé en ce que** les logements de cales (20) sont agencés pour être tournés jusqu'à atteindre une attitude inclinée, pour fixer les extrémités (8a, 8b) des câbles de compensation (8) en liaison avec la cabine d'ascenseur (2) et/ou le contrepoids (4).

6. Agencement selon la revendication 5, **caractérisé en ce que** les logements de cales (20) sont fixés à une base de fixation (9), qui est dotée d'une charnière (18) ou d'une structure correspondante de type pivot, pour tourner la base de fixation (9) jusque dans une attitude favorable dans le but de fixer les secondes extrémités (8a) des câbles de compensation (8).

7. Agencement selon la revendication 6, **caractérisé en ce que** la base de fixation (9) comprend un support (16) des logements de cales (20), ledit support est suspendu depuis la poutre inférieure (1a) de l'élingue de cabine (1) de la cabine d'ascenseur (2) au moins par le biais d'une pluralité de moyens de suspension (14) dotés de trous de fixation (15).

8. Agencement selon la revendication 7, **caractérisé en ce que** le support (16) des logements de cales (20) comprend une pluralité de trous de fixation (17) disposés à intervalles réguliers les uns des autres, dont les dimensions et la distance les uns des autres sont sensiblement identiques aux dimensions et à la distance les uns des autres des trous de fixation (15) des moyens de suspension (14).

9. Agencement selon la revendication 7 ou 8, **caractérisé en ce que** le support (16) est agencé pour être fixé aux moyens de suspension (14) à intervalles échelonnés, lesdits intervalles correspondant à la distance entre les trous de fixation (15 et 1 7).

10. Agencement selon une quelconque des revendications 7 à 9 ci-dessus, **caractérisé en ce que** des éléments de support (12) qui peuvent être ajustés dans leur position dans la direction longitudinale de la poutre inférieure (1a) sont fixés à la poutre inférieure (1a) de la cabine d'ascenseur (2), auxquels éléments de support les moyens de suspension (14) sont fixés au niveau de leurs extrémités supérieures.

11. Agencement selon la revendication 10, **caractérisé en ce que** le coin inférieur des éléments de support (12) est agencé pour fonctionner comme une butée (24) pour empêcher que le support (16) ne tourne trop.
